# EUROPÄISCHE PATENTSCHRIFT

(11) **EP 2 176 346 B1**
(45) Veröffentlichungstag und Bekanntmachung des Hinweises auf die Patenterteilung: **06.03.2013**
(21) Anmeldenummer: 08749745.9
(22) Anmeldetag: 25.04.2008
(51) Int. Cl.: C08F 283/00, C08F 283/04, C08F 283/08, C08H 1/02, C08L 89/06, C08L 51/08, C08L 51/00, C08L 87/00, C08L 99/00, C08L 97/00, C04B 24/00, C09K 8/42

(54) **PFROPFPOLYMER-MISCHUNG**
GRAFT POLYMER MIXTURE
MÉLANGE DE POLYMÈRE GREFFÉ

(30) Priorität: 08.08.2007 DE 102007037466
(43) Veröffentlichungstag der Anmeldung: 21.04.2010
(73) Patentinhaber: BASF Construction Polymers GmbH, 83308 Trostberg (DE)
(72) Erfinder: ASSMANN, Andrea, 83567 Unterreit (DE); REICHENBACH-KLINKE, Roland, 83278 Traunstein (DE)
(86) Internationale Anmeldenummer: PCT/EP2008/055089
(87) Internationale Veröffentlichungsnummer: WO 2009/019050

(56) Entgegenhaltungen:
- EP-A- 0 052 156
- EP-A- 1 418 189
- WO-A-2008/019987
- GB-A- 2 210 888
- US-A- 5 147 964
- US-A- 6 013 774

## Beschreibung

Gegenstand der vorliegenden Erfindung ist eine Pfropfpolymer-Mischung auf der Basis voneinander verschiedener Pfropfungsgrundlagen.

Wasserlösliche Polymere, welche durch Polymerisation von ethylenisch ungesättigten Monomeren hergestellt werden, finden vielfältige Verwendung als Additive in bauchemischen Anwendungen und bei der Erschließung, Ausbeutung und Komplettierung unterirdischer Erdöl- und Erdgaslagerstätten.

Aus US 4,053,323 und US 3,936,408 ist die Verwendung von Polyamidosulfonaten als Fließmittel für hydraulische Bindemittel, insbesondere bei der Zementierung von Bohrlöchern bekannt. In WO 03/085013 A1 werden wasserlösliche Copolymere auf Basis olefinischer Sulfonsäuren und deren Verwendung als Wasserretentionsmittel für wässrige Baustoffsysteme diskutiert, welche mineralische Bindemittel enthalten. In DE 102 29 837 A1 sind polymere Wasserrückhaltemittel für Bohrspülungen und Zementschlämmen auf Basis Vinylhaltiger Sulfonsäuren beschrieben. Gemäß dem US-Patent 4,654,085 wird Polyacrylamid zusammen mit Cellulose- und Stärkeethern als Additiv zur Verbesserung der Standfestigkeit von Zementformulierungen verwendet. Des Weiteren werden zur Verringerung des Wasserzuflusses bei der Förderung von Öl oder Gas wasserlösliche Copolymere auf Basis von Acrylamidoalkylensulfonsäure, N-Vinylamiden, Acrylamid und Vinylphosphonsäure eingesetzt (vgl. WO 03/033860 A2). Aus EP 0427107 A2 ist die Verwendung eines wasserlöslichen Copolymers bestehend aus ethylenisch ungesättigten Sulfonsäuren und Acrylamiden als rheologisches Additiv für Bohrspülungen bekannt. Ein weiteres Anwendungsgebiet für wasserlösliche Polymere, welche mit Hilfe einer Polymerisation von ethylenisch ungesättigten Monomeren hergestellt werden, ist die Entölung von mineralölhaltigen Sand- oder Gesteinsmassen, wie in EP 095730 A2 diskutiert. Die Verwendung von Copolymeren auf Basis von hydrolysiertem Acrylamid und Sulfonsäure-Derivaten als Wasserrückhaltemittel in Zementschlämmen ist dem US-Patent 4,015,991 zu entnehmen.

Wasserretentionsmittel dienen dazu, das Entweichen von Wasser aus Schlämmen anorganischer oder organischer Bindemittel oder Pigmente zu verringern oder vollständig zu verhindern. Ursache für den Wasserverlust sind meist Kapillarkräfte, die von porösen Untergründen ausgehen. Wasserretentionsmittel können entweder durch ihre chemische Struktur Wasser an sich binden oder aber die Ausbildung eines dichten Filterkuchens auf dem Untergrund fördern. Wasserretentionsmittel werden zu diesem Zweck wie eben beschrieben z. B. in Putzen, Fliesenklebern, Fugenmörtel, Spachtel- und Selbstverlaufsmassen, aber auch in Tiefbohrzementschlämmen eingesetzt. Außerdem werden sie unter anderem auch in wässrigen Tonsuspensionen, die z. B. als Bohrflüssigkeiten dienen können, verwendet. Aus dem Stand der Technik sind eine Reihe von Verbindungen mit derartigen Fähigkeiten bekannt. So beschreibt EP-A 1 090 889 Mischungen aus Ton und Guar als Wasserretentionsmittel. DE-OS 195 43 304 und US 5,372,642 offenbaren Cellulosederivate als Wasserretentionsmittel, EP-A 116 671, EP-A 483 638 und EP-A 653 547 beschreiben synthetische Polymere, die als Comonomer acrylamidosubstituierte Sulfonsäuren enthalten.

Alle diese aus dem Stand der Technik bekannten wasserlöslichen Polymere, welche durch Polymerisation von ethylenisch ungesättigten Monomeren hergestellt werden, sind in der Regel nicht biologisch abbaubar. Somit können sich diese Verbindungen in der Umwelt anreichern und zur Kontamination von Böden oder Gewässern beitragen. Dies ist von besonderer Relevanz, wenn Zementschlämmen z.B. mit Trinkwasser oder landwirtschaftlichen Nutzflächen in Kontakt kommen. Besonders zu berücksichtigen ist in diesem Zusammenhang auch die Verwendung von wasserlöslichen Polymeren bei der Exploration und Produktion von Erdöl oder Erdgas auf hoher See, also im sogenannten Off-shore-Bereich. Hier finden diese Polymere zum Beispiel als Wasserrückhaltemittel für zementäre Systeme in der Konstruktion von Bohrplattformen und in der Bohrlochzementierung Anwendung. Die eingesetzten Polymere können im ersten Fall durch Seewasser ausgewaschen werden und im letzteren Fall aus der Zementschlämme in wasserführende Formationsschichten übertreten. Deswegen sind nach der "Konvention für den Schutz der Marinen Umwelt im Nord-Ost-Atlantik" (OSPAR Convention) bioabbaubare Produkte beim Einsatz in mariner Umgebung zu bevorzugen.

Vereinzelt nennt der Stand der Technik bereits bioabbaubare, polymere Additive für Zementschlämmen. So sind aus US 6,019,835 modifizierte Lignosulfonate als bioabbaubare Fließmittel bekannt. Die vorveröffentlichte US-Anmeldung 2002/0005287 beschreibt Polyasparaginsäure als bioabbaubares Hochleistungsfließmittel. Wasserlösliche, biologisch abbaubare Copolymere auf Polyamidbasis und deren Verwendung sind aus der deutschen Offenlegungsschrift DE 103 14 354 A1 bekannt. Die dort beschriebenen Copolymere besitzen mindestens eine aufgepfropfte Seitenkette, aufgebaut aus Aldehyden und schwefelhaltigen Säuren und ggf. aus mindestens einer Verbindung der Reihe Ketone, aromatische Alkohole, Harnstoff-Derivate und Amino-s-triazine. Als bevorzugte Polyamid-Komponenten sind natürliche Polyamide, wie Caseine, Gelatinen und Collagene genannt. Verwendung finden die hier beschriebenen Copolymere insbesondere als Fließmittel oder Wasserretentionsmittel für anorganische Bindemittel und Pigmente. Das geschilderte Wasserrückhaltevermögen geht überwiegend auf synergistische Wirkungsweisen der beschriebenen Copolymere zusammen mit modifizierten Polysacchariden zurück. Zwar sind alle diese wasserlöslichen Polymere biologisch abbaubar; sie weisen aber in der Regel den großen Nachteil auf, dass sie keine so große Variabilität der chemischen Zusammensetzung erlauben, wie die aus ethylenisch ungesättigten Monomeren aufgebauten Polymere, und daher auch in ihrer Anwendungsbreite, d.h. beispielsweise gegenüber Temperatur- oder Druckänderungen bzw. gegenüber Schwankungen des wässrigen Mediums bzgl. der Salzkonzentration, stark limitiert sind. Da eine Vielzahl verschiedener ethylenisch ungesättigter Monomere zur Verfügung stehen, welche jeweils unterschiedliche funktionelle Gruppen aufweisen, lässt sich meist durch Variation der Monomere für viele Anforderungen ein passendes Polymer "maßschneidern".

Gelatinepfropfpolymere sind generell aus der europäischen Patentanmeldung EP 0 015 880 bekannt. Gemäß dieser Veröffentlichung werden die Polymere in Empfangselementen eingesetzt und dienen dabei insbesondere als Farbstoffbeizmittel für fotographische Materialien. Die beschriebenen Pfropfpolymere bestehen mindestens aus drei Komponenten, bei denen es sich um wasserlösliche proteinartige Polymere, ein bei der Homopolymerisation ein wasserunlösliches Polymer lieferndes Monomer und schließlich um ein eine Sulfonatgruppe enthaltendes und bei der Homopolymerisation ein wasserlösliches Polymer lieferndes Monomer handelt. Gelatine wird als typischer Vertreter der wasserlöslichen, proteinartigen Polymere bezeichnet und Acrylmonomere als typische Vertreter der Monomere, die ein wasserunlösliches Polymer liefern.

Aus der noch unveröffentlichten deutschen Druckschrift DE 10 2006 038 809.7 ist ein wasserlösliches und biologisch abbaubares Copolymer auf Polyamid-Basis und deren Verwendung bekannt. Das hierbei beschriebene Copolymer enthält mindestens eine aufgepfropfte Seitenkette, die aus ethylenisch ungesättigten Verbindungen aufgebaut ist. Als bevorzugte Verwendung ist ein Additiv für hydraulische Bindemittel enthaltende Zusammensetzungen und insbesondere ein Wasserretentionsmittel genannt. Die Polyamid-Komponente wird vorzugsweise aus der Reihe der natürlichen Polyamide ausgewählt, wobei auch deren durch Oxidation, Hydrolyse oder Depolymerisation entstandene Abbauprodukte, sowie synthetische Polyamide und entsprechende Abbauprodukte in Frage kommen. Typische Vertreter der ethylenisch ungesättigten Komponente sind vinylhaltige Verbindungen. Diese bioabbaubaren und wasserlöslichen Copolymere sind auch für extreme Bedingungen geeignet, wie sie insbesondere bei der Erschließung, Ausbeutung und Komplettierung unterirdischer Erdöl- und Erdgaslagerstätten und bei Tiefenbohrungen auftreten. Die beschriebenen Copolymere können je nach Zusammensetzung der aufgepfropften Seitenketten, auch als Fließmittel eingesetzt werden, wobei belegt ist, dass die Fließeigenschaften der Schlämme, der sie zugesetzt worden sind, signifikant verbessern.

Wie bereits angesprochen, herrschen insbesondere im Zusammenhang mit der Zementierung von Bohrlöchern extreme Bedingungen, die sich in besonders hohen Temperaturen und Salzgehalten äußern. Pfropfpolymere von olefinischen Monomeren auf Braunkohle- bzw. Tannin-Derivaten als Pfropfungsgrundlage sind in diesem Zusammenhang aus dem Stand der Technik bekannt:

US 4,579,927 beschreibt Copolymere, die aus flavanoiden Tanninen und acrylischen Monomeren aufgebaut sind. Derartige Polymere sind wasserlöslich und zeigen eine ausgeprägte thermische Stabilität. Außerdem können diese Copolymere als Additive in wässrigen Bohrflüssigkeiten eingesetzt werden. Ein typisches Copolymer besteht aus Tannin und ethylenisch ungesättigten Monomeren wie bspw. Vinylsulfonsäure. Außerdem können noch substituierte Amide enthalten sein. Ein Verfahren zur Verringerung des so genannten Fluid Loss in zementären Zusammensetzungen, die hohe Salzkonzentrationen aufweisen können, ist aus US 4,703,801 bekannt. Bei dem beschriebenen Additiv handelt es sich um ein Pfropfpolymer, dessen Pfropfungsgrundlage Lignin, Lignit oder derivatisierte Cellulose sein kann. Als aufgepfropfte Gruppen kommen Homopolymere, Copolymere und Terpolymere von 2-Acrylamido-2-methylpropansulfonsäure (AMPS), Acrylonitril, N,N-Dimethylacrylamid, Acrylsäure sowie N,N-Dialkylaminoethylmetacrylat und ihre Salze in Frage. Schließlich beschreibt US 4,938,803 gepfropfte Vinyllignite, die als Fluid Loss Additive eingesetzt werden können. Das Lignit ist dabei mit mindestens einem Vinylmonomer gepfropft, wobei dieses Monomer auch mit mindestens einem Comonomer wie bspw. AMPS in Mischung vorliegen kann. Schließlich sei noch auf das US Dokument 5,147,964 hingewiesen, gemäß dem zur Verringerung des Fluid Loss in Zementslurrys, die im Ölfeldbereich eingesetzt werden, vinylisch gepfropfte Tannine verwendet werden. Auch in diesem Fall ist AMPS neben Acrylamid ein typischer Vertreter des Vinylmonomers.

Hauptnachteil all dieser in den letztgenannten US-Dokumenten beschriebenen Polymere ist deren fehlende Bioabbaubarkeit, weshalb sie unter Beachtung der geschilderten Anwendungsvorschriften im Off Shore-Bereich nicht eingesetzt werden können.

Für die vorliegende Erfindung hat sich deshalb die Aufgabe gestellt, neue Pfropfpolymere und deren Mischungen bereitzustellen, die wasserlöslich und bioabbaubar sind, wobei auf Pfropfungsgrundlagen zurückgegriffen werden sollte, die unter wirtschaftlichen Gesichtspunkten günstig zugänglich sind und die hinsichtlich der Synthese keine aufwändigen Schritte erfordern.

Gelöst wurde diese Aufgabe mit Hilfe einer Pfropfpolymer-Mischung auf Basis voneinander verschiedener Pfropfungsgrundlagen, welche erfindungswesentlich dadurch gekennzeichnet ist, dass die Pfropfpolymere als Monomer-Komponente a) Braunkohle und/oder Polyphenol-Derivate und/oder b) Polyamide, sowie c) voneinander verschiedene ethylenisch ungesättigte Monomere enthalten.

Als überraschend hat sich insgesamt herausgestellt, dass die neuen Pfropfpolymere in deren beliebigen Mischungen gemäß vorliegender Erfindung nicht nur als Fließmittel ganz allgemein in bauchemischen Anwendungen eingesetzt werden können, sondern dass sie insbesondere als Wasserrückhaltemittel (Fluid Loss Additiv) insbesondere im Hochleistungsbereich eine hervorragende Wirkung entfalten. Sie weisen nämlich neben der angestrebten Eigenschaft der Wasserlöslichkeit und Bioabbaubarkeit generell eine besonders ausgeprägte Salzstabilität und eine ebenso deutlich ausgeprägte Temperaturstabilität auf. Außerdem konnte überraschenderweise festgestellt werden, dass diese Pfropfpolymere in deren beliebigen Mischungen eine so genannte "Gel-Breaker-Wirkung" aufweisen. Durch diesen Effekt wird ein vorzeitiges und ungewünschtes Ansteifen der Zementschlämme verhindert. Es war nicht vorherzusehen, dass mit Hilfe einer an sich nicht bioabbaubaren Pfropfungsgrundlage, wie sie Braunkohle- und Polyphenol-Verbindungen darstellen, insgesamt wasserlösliche und bioabbaubare Pfropfpolymere erhältlich sind, die zusätzlich eine signifikante dispergierende Wirkung zeigen.

Eine bevorzugte Variante der vorliegenden Erfindung besteht darin, dass die Pfropfpolymere der beanspruchten Mischung die Monomer-Komponenten a) und b) als Pfropfungsgrundlage und/oder Pfropfungskomponente und die Monomer-Komponente c) als Pfropfungskomponente enthalten. Des Weiteren wird als vorteilhaft angesehen, dass die Pfropfpolymere aus unterschiedlichen Varianten bestehen: Gemäß Alternative I) fungiert die Monomer-Komponente a) als Pfropfungsgrundlage und mindestens eine der Monomer-Komponenten b) und c) als Pfropfungskomponente; Alternative II) sieht vor, dass die Monomer-Komponente b) als Pfropfungsgrundlage vorliegt und mindestens eine der Monomer-Komponenten a) und c) als Pfropfungskomponenten fungieren; gemäß Variante III) bestehen die Pfropfpolymere aus der Monomer-Komponente a) als Pfropfungsgrundlage, der wiederum ein Pfropfprodukt bestehend aus der Komponente b) als Grundlage und der Monomer-Komponente c) als Pfropfungskomponente aufgepfropft ist; ein ähnliches doppelt gepfropftes Pfropfpolymer umfasst die Alternative IV): der Monomer-Komponente b), die als Pfropfungsgrundlage fungiert, wird ein Pfropfprodukt aufgepfropft, welches die Komponente a) als Grundlage und die Monomer-Komponente c) als Pfropfungskomponente aufweist.

Die vorliegende Erfindung berücksichtigt als bevorzugte Monomer-Komponente a) mindestens einen Vertreter der Reihe Braunkohle, Braunkohlekoks, Lignit und Braunkohle-Derivate wie z. B. Lignosulfonate und Huminsäure sowie Tannine.

Hinsichtlich der Monomer-Komponente b) sind natürliche Polyamide und hier besonders bevorzugt Caseine, Gelatinen, Collagene, Knochenleime, Blutalbumine, Sojaproteine und deren durch Oxidation, Hydrolyse oder Depolymerisation entstandene Abbauprodukte sowie synthetische Polyamide und wiederum deren durch Oxidation, Hydrolyse oder Depolymerisation entstandene Abbauprodukte geeignet. In Frage kommen natürlich auch sämtliche mögliche Mischungen daraus.

Bei der Monomer-Komponente c) handelt es sich vorzugsweise um vinylhaltige Verbindungen in ihrem O-, S-, P- und N-Formen, ausgewählt aus der Reihe der Vinylether, Acrylsäure, Methacrylsäure, 2-Ethylacrylsäure, 2-Propylacrylsäure, N,N-Dimethyl-methyl-acrylamid, Vinylessigsäure, Vinylphosphonsäure, Croton- und Isocrotonsäure, Maleinsäure, Fumarsäure, Itaconsäure, Citraconsäure sowie deren Ester und Amide, und Styrole. Besonders bevorzugt sind deren sulfonierte Formen anzusehen, wie vinylhaltige Sulfonsäure der Reihe 2-Acrylamido-2- methylpropansulfonsäure (AMPS), Vinylsulfonsäure, Methallylsulfonsäure und deren mindestens 1-wertige Salze sowie beliebige Mischungen daraus.

In einer weiteren bevorzugten Variante kann das gepfropfte Copolymer die Polyamid-Komponente b) in Anteilen von 10 bis 80 Gew.-% und bevorzugt von 50 bis 80 Gew.-% enthalten. Die ethylenisch ungesättigte Monomerkomponente c) sollte in Anteilen von 10 bis 80 Gew.-% und bevorzugt von 50 bis 80 Gew.-% enthalten sein. Hinsichtlich der Pfropfungsgrundlage sieht die vorliegende Erfindung vor, dass diese unabhängig von deren chemischer Struktur in bevorzugten Anteilen von 0,1 bis 60 Gew.-% und bevorzugt von 0,5 bis 50 Gew.-% in den Pfropfpolymeren enthalten ist.

Insgesamt berücksichtigt die vorliegende Erfindung auch so genannte "doppelte" Pfropfcopolymere, wobei im konkreten Fall bspw. ein auf ein Braunkohle- bzw. Tannin-Derivat, also im weiteren Sinn auf eine Polyphenol-Basis, gepfropftes Acrylatpolymer auf Gelatine gepfropft wird. Somit wird ein ursprünglich nicht bioabbaubares Polymer bioabbaubar und außerdem wasserlöslich. Möglich ist aber auch das Aufpfropfen einer Polyphenol-Verbindung, die ihrerseits zusätzlich gepfropft sein kann, auf ein Polyamid, wie z. B. Gelatine, wodurch ebenfalls ein bioabbaubares und wasserlösliches Pfropfpolymer entsteht.

Dies ist auch der Grund dafür, warum Pfropfpolymere als bevorzugt anzusehen sind, die wasserlöslich und/oder biologisch abbaubar sind und damit den resultierenden Mischungen die selben Eigenschaften verleihen.

Neben der Pfropfpolymer-Mischung umfasst die vorliegende Erfindung auch ein Verfahren zur Herstellung der darin enthaltenen Pfropfpolymere. Dabei wird vorzugsweise in einem ersten Schritt A) der Monomer-Komponente b), also typischerweise einem Casein, einer Gelatine, oder einem Collagen, bei Temperaturen zwischen -10° C und 250° C und insbesondere zwischen 0° C und 100° C, die Monomer-Komponente c) aufgepfropft. Dies geschieht vorzugsweise jeweils in Gegenwart eines Lösemittels und insbesondere eines polaren Lösemittels wie Wasser oder Dimethylsulfoxid. In einem zweiten Schritt wird das so erhaltene Pfropfungsprodukt der Monomer-Komponente a) als Pfropfungsgrundlage aufgepfropft, woraus ein "doppelt gepfropftes" Produkt entsteht. Alternativ oder parallel kann B) bei den oben genannten Verfahrensbedingungen die Monomer-Komponente c) der Monomer-Komponente a) aufgepfropft werden. Schließlich ist erfindungsgemäß vorgesehen, die aus den Schritten A) und B) erhaltenen Pfropfpolymere ggf. abzumischen. Unter den angegebenen Bedingungen sind auch alle anderen denkbaren Pfropfpolymere gemäß Erfindung herstellbar.

Es ist dabei auch möglich, dass im Schritt A) die Monomer-Komponente b) mit einer Doppelbindung funktionalisiert und anschließend mit der Monomer-Komponente c) in Gegenwart der Monomer-Komponente a) polymerisiert wird.

Hinsichtlich der genannten Funktionalisierung sieht die vorliegende Erfindung vor, dass diese bzgl. der Monomer-Komponente b) durch Reaktion mit maximal 10 Gew.-% einer Anhydrid-Verbindung vom Typ Maleinsäure oder Methacrylsäureanhydrid, oder einer Epoxid-Verbindung vom Typ Glycidylmethacrylat erfolgt.

Die vorliegende Erfindung sieht als zusätzliche Alternative zu dem eben beschriebenen Verfahren mit seinen Teilschritten A), B) und ggf. C) vor, dass die Monomer-Komponenten a), b) und c) bei Temperaturen zwischen -10 und 250 °C und insbesondere zwischen 0 und 100 °C umgesetzt werden, was wiederum vorzugsweise jeweils in Gegenwart eines Lösemittels und insbesondere eines polaren Lösemittels, wie Wasser oder Dimethylsulfoxid, erfolgen sollte.

Mit dieser, aber auch der oben genannten Verfahrensvariante, werden Pfropfpolymer-Mischungen erhalten, die I) ein doppelt gepfropftes Polymer bestehend aus der Monomer-Komponente a) als Pfropfungsgrundlage und einem aufgepfropften Pfropfungsprodukt bestehend aus der Monomer-Komponente b) als Grundlage und der Monomer-Komponente c) als Pfropfungskomponente, II) ein doppelt gepfropftes Polymer bestehend aus der Monomer-Komponente b) als Pfropfungsgrundlage und einem dieser aufgepfropften Pfropfungsprodukt, dieses bestehend aus der Monomer-Komponente a) als Grundlage und der Monomer-Komponente c) als Pfropfungskomponente, III) ein Pfropfungsprodukt bestehend aus der Monomer-Komponente a) als Grundlage und der Monomer-Komponente b) als Pfropfungskomponente, und beliebige Mischungen daraus enthält.

Aus der Tatsache, dass die Monomer-Komponenten a) und b) jeweils sowohl als Pfropfungsgrundlage als auch als Pfropfungskomponenten fungieren können, ist ersichtlich, dass unter den genannten Verfahrensbedingungen Pfropfungspolymere zugänglich sind, die unterschiedliche Monomerkombinationen aufweisen und auch im doppelt gepfropften Zustand vorliegen können. Lediglich die Monomer-Komponente c), also die voneinander verschiedenen ethylenisch ungesättigten Monomere fungieren ausschließlich als Pfropfungskomponente und stehen nicht als Pfropfungsgrundlage zur Verfügung.

Zusätzlich ist vorgesehen, die erhaltenen Pfropfcopolymere zusätzlich zu vernetzen und/oder nachzuvernetzen, was insbesondere mit Hilfe von mehrfach funktionalen ethylenisch ungesättigten Verbindungen wie z. B. Di- oder Trimethacrylaten erfolgen kann.

Auf diese oder ähnliche Weise werden Pfropfpolymere erhalten, die bevorzugte Mol-Massen Mₙ > 5.000 g/mol, und insbesondere > 10.000 g/mol aufweisen, wobei in den Mischungen gemäß vorliegender Erfindung Pfropfpolymere mit M̅ₙ > 50.000 g/mol als besonders bevorzugt anzusehen sind.

Trotz der breiten und eigentlich nicht eingeschränkten Anwendungsmöglichkeiten sieht die vorliegende Erfindung als bevorzugte Verwendung der genannten Pfropfpolymer-Mischungen bauchemische Anwendungen insgesamt sowie die Erschließung, Ausbeutung und Komplettierung unterirdischer Erdöl- und Erdgas-Lagerstätten im Besonderen, und au-βerdem Tiefbohrungen vor. Als Additiv für hydraulische Bindemittel enthaltende Zusammensetzungen und insbesondere als Wasserretentionsmittel und/oder Fließmittel sind die beschriebenen Pfropfpolymer-Mischungen besonders geeignet. Aber auch bei der Zementierung von Öl- und Gasbohrungen, bevorzugt im Off Shore-Bereich, können sie eingesetzt werden, was von der vorliegenden Erfindung ebenfalls umfasst ist.

Zusammenfassend ist festzustellen, dass die Aufgabenstellung, nämlich die zur Verfügungstellung neuer wasserlöslicher und/oder bioabbaubarer Pfropfcopolymere mit den vorgeschlagenen Mischungen nicht nur erfüllt wurde, sondern deshalb übertroffen werden konnte, da die Mischungen der beschriebenen Polymerverbindungen eine hohe Temperatur- und Salzstabilität aufweisen, wobei es auch gelungen ist, ursprünglich nicht bioabbaubare Verbindungen auf Basis von Braunkohle- und/oder Polyphenolen bioabbaubar zu machen und diese somit neuen Anwendungsgebieten zugänglich zu machen. Die Ausgangsmaterialien stehen ohne größere Einschränkungen zur Verfügung und die neuen Pfropfpolymere sind im allgemeinen ohne größeren technischen Aufwand auf wirtschaftliche Weise herstellbar.

Die nachfolgenden Beispiele veranschaulichen diese Vorteile der erfindungsgemäßen Pfropfpolymere.

### Beispiele

Die nachfolgenden Herstellungsbeispiele 1 und 2 veranschaulichen die Funktionalisierung der Monomer-Komponente b):

### 1. Herstellungsbeispiele:

### Beispiel 1.1

540 g Technische Gelatine (Bloom 0) wurde unter Erwärmen auf 70°C in 1260 g Wasser gelöst. Der pH-Wert wurde mit einer 20 %igen NaOH-Lösung auf 8,5 eingestellt. Danach wurde innerhalb von 60 min 25,5 g Maleinsäureanhydrid portionsweise zugegeben. Dabei wurde der pH durch gleichzeitige Zudosierung von NaOH bei 8,5 gehalten. Nach der vollständigen Zugabe des Maleinsäureanhydrids wurde 60 min bei 70°C nachgerührt. Es wurde ein hochmolekulares Polyamid mit einem hohen Funktionalisierungsgrad erhalten.

### Beispiel 1.2:

175 g Technische Gelatine (Bloom 330) wurde unter Erwärmen auf 70°C in 1260 g Wasser gelöst. Der pH-Wert wurde mit einer 20 %igen NaOH-Lösung auf 8,5 eingestellt. Danach wurde innerhalb von 60 min 34 g Maleinsäureanhydrid portionsweise zugegeben. Dabei wurde der pH durch gleichzeitige Zudosierung von NaOH bei 8,5 gehalten. Nach der vollständigen Zugabe des Maleinsäureanhydrids wurde 60 min bei 70°C nachgerührt. Es wurde ein hochmolekulares Polyamid mit einem hohen Funktionalisierungsgrad erhalten.

### Beispiel 1.3 (Pfropfpolymer auf Huminsäure-Basis):

In 245 g Wasser wurde 57 g 50%ige Natronlauge eingebracht und darin portionsweise 59 g Acrylamidopropansulfonsäure (Monomer-Komponente c)) gelöst. Die Temperatur darf nicht über 35°C steigen. Anschließend wurde der pH-Wert auf 11,5 bis 12,5 eingestellt und 175 g 15%ige Huminsäure zugegeben. 250 g des funktionalisierten Polyamids aus Herstellungsbeispiel 1 (Monomer-Komponente b)) werden zugefügt und der pH-Wert auf 9,5 eingestellt. Während des Aufheizens auf die Starttemperatur von 61 °C wurde Stickstoff durch das Reaktionsgemisch geleitet. Vor dem Polymerisationsstart durch 13,5 g 33%ige Natriumperoxodisulfat-Lösung und 1,5 g Tetraethylpentaamin erfolgte die Zugabe von 26 g Dimethylaminomethacrylat (Vernetzer). Die Reaktionsmischung wurde 2 Stunden bei 80 bis 85°C gerührt und anschließend der pH-Wert auf 8 eingestellt.

### Beispiel 4 (Pfropfpolymer auf Lignit-Basis):

800 g Wasser, 100 g 50%ige Natronlauge und 65 g Lignit wurden 5 min mit dem Ultra-Turrax gemischt und dann im 2L-Glaskolben vorgelegt. Dann wurden 200 g Acrylamidopropansulfonsäure (Monomer-Komponente c)) portionsweise darin gelöst. Die Temperatur darf nicht über 35°C steigen. Als weitere Comonomere c) wurden 6 g Acrylsäure und 60 g Dimethylmethacrylat eingesetzt. Während des Aufheizens auf die Starttemperatur von 70°C wurde Stickstoff durch das Reaktionsgemisch geleitet. 500 g des funktionalisierten Polyamids (Monomer-Komponente b)) aus Herstellungsbeispiel 2 wurden ebenfalls auf 70°C vorgeheizt und dann zum Reaktionsgemisch gegeben. Der pH-Wert lag zwischen 10 und 11. Die Polymerisation wurde 3mal mit insgesamt 45g 30%iger Natriumperoxodisulfat-Lösung gestartet. Das Reaktionsgemisch wurde 2 Stunden bei 70°C gerührt und anschließend der pH-Wert auf 11 eingestellt.

### 2. Anwendungsbeispiele

### 2.1) als Fluid Loss-Additive:

Die aus den Herstellungsbeispielen 3 bis 5 gewonnenen bioabbaubaren Pfropfpolymere eignen sich als Fluid Loss Additive für eine Vielzahl von Bedingungen, wie unterschiedliche Konzentrationen 1- oder mehrwertiger Salze und verschiedene Temperatur-Bereiche. Je nach Monomerzusammensetzung können hohe oder niedrige Zementschlämmen-Rheologien erhalten bzw. eingestellt werden.

In den Tabellen 1 und 2 sind derartige Beispiele aufgelistet:

**Tabelle 1: Zusammensetzung der Zementschlämmen:**

| Testschlämme | Polymer aus Beispiel | Dosierung [%bwoc] | T [°C] | w/z | Zement | Salzgehalt | Zuschläge [%bwoc] |
|---|---|---|---|---|---|---|---|
| 1 | 1.3 | 0,2 | 82 | 0,38 | Class G | Frischwasser | -- |
| 2 | 1.3 | 0,2 | 82 | 0,44 | Class G | Frischwasser | -- |
| 3 | 1.3 | 0,2 | 82 | 0,38 | Class H | Meerwasser | -- |
| 4 | 4 | 0,2 | 52 | 0,44 | Class G | Meerwasser | -- |
| 5 | 4 | 0,5 | 102 | 0,44 | Class H | NaCl gesättigt | 15%bwoc Fe₂O₃ |
| | | | | | | | 44%bwoc Sand |

**Tabelle 2: Fann 35-Rheologie und Fluid Loss Werte:**

| Testschlämme | Fann 35 Rheologie | T | FL | Dosierung |
|---|---|---|---|---|
| | [300-200-100-6-3-600] | [°C] | [ml] | [%bwoc] |
| 1 | 193-135-72-4-2>300 | 82 | 24 | 0,2 |
| 2 | 103-71-38-2-1-187 | 82 | 22 | 0,2 |
| 3 | 220-160-92-11-7>300 | 82 | 26 | 0,2 |
| 4 | 200-149-90-15-14>300 | 52 | 42 | 0,1 |
| 5 | 230-162-87-6-3>300 | 102 | 26 | 0,5 |

### 2.2) als Gel-Breaker:

Bei manchen Zementen oder Zementschlämmen-Rezepturen ist ein so genanntes vorzeitiges Ansteifen zu beobachten, bei dem die Zementschlämme zunächst andickt und dann vor dem endgültigen Abbinden wieder verflüssigt.

Mit dem HTHP-Konsistometer kann dies dokumentiert werden.

Zusammensetzung der Zementschlämme:
800 g Dyckerhoff Class G Cement
8 g Fluid Loss-Polymer
X g Polymer gemäß Herstellbeispiel 1.3 (als Gel Breaker)
369 g North Sea Water

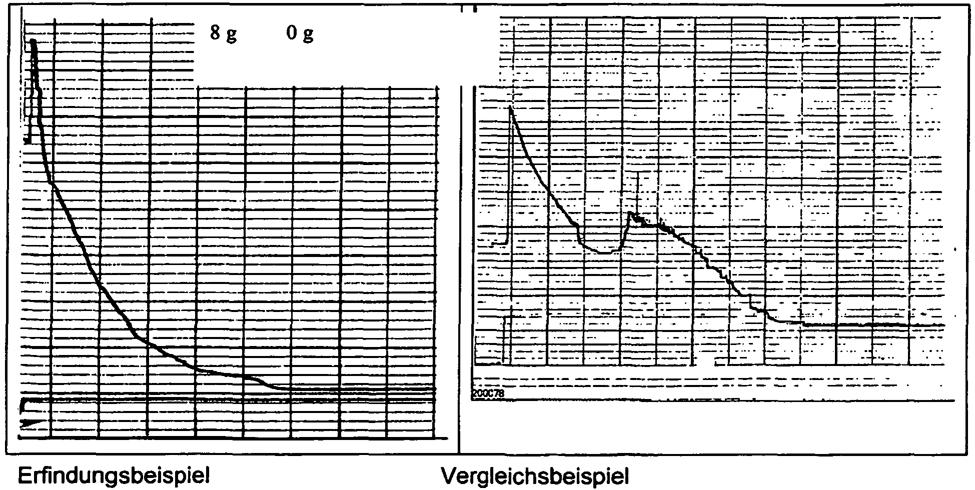

## Patentansprüche

1. Pfropfpolymer-Mischung auf Basis voneinander verschiedener Pfropfungsgrundlagen, **dadurch gekennzeichnet, dass** die Mischung und insbesondere die darin enthaltenen Pfropfpolymere wasserlöslich und/oder biologisch abbaubar sind und die Pfropfpolymere als Monomer-Komponente a) Braunkohle und/oder Polyphenol-Derivate und b) Polyamide, sowie c) voneinander verschiedene ethylenisch ungesättigte Monomere enthalten.

2. Pfropfpolymer-Mischung nach Anspruch 1, **dadurch gekennzeichnet, dass** die Pfropfpolymere die Monomer-Komponenten a) und b) als Pfropfungsgrundlage und/oder Pfropfungskomponente und die Monomer-Komponente c) als Pfropfungskomponente enthalten.

3. Pfropfpolymer-Mischung nach einem der Ansprüche 1 oder 2, **dadurch gekennzeichnet, dass** die Pfropfpolymere bestehen I) aus der Monomer-Komponente
a) als Pfropfungsgrundlage und der Monomer-Komponente
b) und c) als Pfropfungskomponente, II) aus der Monomer-Komponente b) als Pfropfungsgrundlage und der Monomer-Komponente a) und
c) als Pfropfungskomponente, III) aus der Monomer-Komponente a) als Pfropfungsgrundlage, der ein Pfropfprodukt bestehend aus der Komponente b) als Grundlage und c) als Pfropfungskomponente aufgepfropft ist, sowie IV) der Monomer-Komponente b) als Pfropfungsgrundlage, der ein Pfropfprodukt bestehend aus der Komponente a) als Grundlage und c) als Pfropfungskomponente aufgepfropft ist.

4. Pfropfpolymer-Mischung nach einem der Ansprüche 1 bis 3, **dadurch gekennzeichnet, dass** es sich bei der Monomer-Komponente a) um mindestens einen Vertreter der Reihe Braunkohle, Braunkohlekoks, Lignit und Braunkohlederivate, wie z. B. Lignosulfonate und Huminsäure, sowie um Tannine handelt.

5. Pfropfpolymer-Mischung nach einem der Ansprüche 1 bis 4, **dadurch gekennzeichnet, dass** es sich bei der Monomer-Komponente b) um mindestens einen Vertreter der Reihe der natürlichen Polyamide, besonders bevorzugt Caseine, Gelatinen, Collagene, Knochenleime, Blutalbumine, Sojaproteine und deren durch Oxidation, Hydrolyse oder Depolymerisation entstandene Abbauprodukte, synthetische Polyamide und deren durch Oxidation, Hydrolyse oder Depolymerisation entstandene Abbauprodukte, sowie Mischungen daraus handelt.

6. Pfropfpolymer-Mischung nach einem der Ansprüche 1 bis 5, **dadurch gekennzeichnet, dass** sie als Monomer-Komponente c) vinylhaltige Verbindungen in ihren O-, S-, P- und N-Formen, ausgewählt aus der Reihe der Vinylether, Acrylsäure, Methacrylsäure, 2-Ethylacrylsäure, 2-Propylacrylsäure, N,N-Dimethyl-methyl-acrylamid, Vinylessigsäure, Vinylphosphonsäure, Croton- und Isocrotonsäure, Maleinsäure, Fumarsäure, Itaconsäure, Citraconsäure sowie deren Ester und Amide und Styrole und bevorzugt in sulfonierter Form wie vinylhaltige Sulfonsäure der Reihe 2-Acrylamido-2-methylpropansulfonsäure (AMPS), Vinylsulfonsäure, Methallylsulfonsäure und deren mindestens 1-wertige Salze sowie beliebige Mischungen daraus enthält.

7. Pfropfpolymer-Mischung nach einem der Ansprüche 1 bis 6, **dadurch gekennzeichnet, dass** das gepfropfte Copolymer die Polyamid-Komponente b) in Anteilen von 10 bis 80 Gew.-%, bevorzugt von 50 bis 80 Gew.-%, und die ethylenisch ungesättigte Monomer-Komponente c) in Anteilen von 10 bis 80 Gew.-%, bevorzugt von 50 bis 80 Gew.-% enthält.

8. Pfropfpolymer-Mischung nach einem der Ansprüche 1 bis 7, **dadurch gekennzeichnet, dass** die Pfropfpolymere die Pfropfungsgrundlage(n) in Anteilen von 0,1 bis 60 Gew.-%, bevorzugt von 0,5 bis 50 Gew.-% enthalten.

9. Verfahren zur Herstellung der Pfropfpolymer-Mischung nach einem der Ansprüche 1 bis 8, **dadurch gekennzeichnet, dass** A) in einem ersten Schritt der Monomerkomponente b) bei Temperaturen zwischen -10° und 250°C, und insbesondere zwischen 0° und 100°C und vorzugsweise jeweils in Gegenwart eines Lösemittels und insbesondere eines polaren Lösemittels, wie Wasser oder Dimethylsulfoxid, die Monomerkomponente c) aufgepfropft wird, und dann in einem zweiten Schritt das so erhaltene Pfropfungsprodukt der Pfropfungsgrundlage a) aufgepfropft wird, und/oder B) bei den genannten Verfahrensbedingungen die Pfropfungskomponente c) der Pfropfungsgrundlage a) aufgepfropft wird, und schließlich ggf. C) die aus den Schritten A) und B) erhaltenen Pfropfpolymere abgemischt werden.

10. Verfahren zur Herstellung der Pfropfpolymer-Mischung nach einem der Ansprüche 1 bis 8, **dadurch gekennzeichnet, dass** im Schritt A) die Monomerkomponente b) mit einer Doppelbindung funktionalisiert und anschließend mit der Monomerkomponente c) in Gegenwart der Monomer-Komponente a) als Pfropfungsgrundlage polymerisiert wird.

11. Verfahren nach Anspruch 10, **dadurch gekennzeichnet, dass** die Funktionalisierung der Monomerkomponente b) durch Reaktion mit maximal 10 Gew.-% einer Anhydrid-Verbindung vom Typ Maleinsäure- oder Methacrylsäureanhydrid oder einer Epoxid-Verbindung vom Typ Glycidylmethacrylat erfolgt.

12. Verfahren zur Herstellung der Propfpolymer-Mischung nach einem der Ansprüche 1 bis 8, **dadurch gekennzeichnet, dass** die Monomer-Komponenten a), b) und c) bei Temperaturen zwischen -10 und 250 °C und insbesondere zwischen 0° und 100 °C und vorzugsweise jeweils in Gegenwart eines Lösemittels und insbesondere eines polaren Lösemittels, wie Wasser oder Dimethylsulfoxid, umgesetzt werden.

13. Verfahren nach einem der Ansprüche 9 bis 12, **dadurch gekennzeichnet, dass** eine Pfropfpolymer-Mischung erhalten wird, die I) ein doppelgepfropftes Polymer bestehend aus der Monomer-Komponente a) als Pfropfungsgrundlage und einem aufgepfropften Pfropfungsprodukt bestehend aus der Monomer-Komponente b) als Grundlage und der Monomer-Komponente c) als Pfropfungskomponente, II) ein doppelgepfropftes Polymer bestehend aus der Monomer-Komponente b) als Pfropfungsgrundlage und einem aufgepfropften Pfropfungsprodukt bestehend aus der Monomer-Komponente a) als Grundlage und der Monomer-Komponente c) als Pfropfungskomponente, und beliebige Mischungen daraus enthält.

14. Verfahren nach einem der Ansprüche 9 bis 11, **dadurch gekennzeichnet, dass** die erhaltenen Copolymere zusätzlich vernetzt und/oder nachvernetzt werden, insbesondere mit Hilfe von mehrfach funktionalen ethylenisch ungesättigten Verbindungen wie z. B. Di- oder Trimethacrylaten.

15. Verfahren nach einem der Ansprüche 9 bis 12, **dadurch gekennzeichnet, dass** Pfropfpolymere mit einer Molmasse Mₙ > 5.000 g/mol, und insbesondere > 10.000 g/mol und besonders bevorzugt > 50.000 g/mol erhalten werden.

16. Verwendung der Pfropfpolymer-Mischung nach einem der Ansprüche 1 bis 8, in bauchemischen Anwendungen sowie bei der Erschließung, Ausbeutung und Komplettierung unterirdischer Erdöl- und Erdgaslagerstätten und bei Tiefbohrungen.

17. Verwendung nach Anspruch 16 als Additiv für hydraulische Bindemittel enthaltende Zusammensetzungen, insbesondere als Wasserretentionsmittel und/oder Fließmittel.

18. Verwendung nach einem der Ansprüche 16 oder 17 bei der Zementierung von Öl- und Gasbohrungen, bevorzugt im Offshore-Bereich.

## Claims

1. Graft polymer mixture based on grafting bases different from one another, **characterized in that** the mixture and in particular the graft polymers present therein are water-soluble and/or biodegradable and the graft polymers contain as monomer component a) brown coal and/or polyphenol derivatives and b) polyamides and c) ethylenically unsaturated monomers differing from one another.

2. Graft polymer mixture according to Claim 1, **characterized in that** the graft polymers contain the monomer components a) and b) as a grafting base and/or graft component and the monomer component c) as a graft component.

3. Graft polymer mixture according to either of Claims 1 and 2, **characterized in that** the graft polymers consist I) of the monomer component a) as a grafting base and the monomer component b) and c) as a graft component, II) of the monomer component b) as a grafting base and the monomer component a) and c) as a grafting component, III) of the monomer component a) as a grafting base onto which a graft product consisting of the component b) as a base and c) as a graft component is grafted, and IV) of the monomer component b) as a grafting base, onto which a graft product consisting of the component a) as a base and c) as a graft component is grafted.

4. Graft polymer mixture according to any of Claims 1 to 3, **characterized in that** the monomer component a) is at least one member of the series consisting of brown coal, brown coal coke, lignite and brown coal derivatives, such as, for example, lignosulphonates and humic acid, and tannins.

5. Graft polymer mixture according to any of Claims 1 to 4, **characterized in that** the monomer component b) is at least one member of the series of the natural polyamides, particularly preferably caseins, gelatins, collagens, bone glues, blood albumins, soya proteins and the degradation products thereof formed by oxidation, hydrolysis or depolymerization, synthetic polyamides and the degradation products thereof formed by oxidation, hydrolysis or depolymerization, and mixtures thereof.

6. Graft polymer mixture according to any of Claims 1 to 5, **characterized in that** it contains, as monomer component c), vinyl-containing compounds in their O, S, P and N forms, selected from the series of the vinyl ethers, acrylic acid, methacrylic acid, 2-ethylacrylic acid, 2-propylacrylic acid, N,N-dimethylmethyl-acrylamide, vinylacetic acid, vinylphosphonic acid, crotonic and isocrotonic acid, maleic acid, fumaric acid, itaconic acid, citraconic acid and the esters and amides thereof and styrenes and preferably in sulphonated form, such as vinyl-containing sulphonic acid of the series consisting of 2-acrylamido-2-methylpropanesulphonic acid (AMPS), vinylsulphonic acid, methallylsulphonic acid and the at least monovalent salts thereof and any desired mixtures thereof.

7. Graft polymer mixture according to any of Claims 1 to 6, **characterized in that** the grafted copolymer contains the polyamide component b) in proportions of 10 to 80% by weight, preferably of 50 to 80% by weight, and the ethylenically unsaturated monomer component c) in proportions of 10 to 80% by weight, preferably of 50 to 80% by weight.

8. Graft polymer mixture according to any of Claims 1 to 7, **characterized in that** the graft polymers contain the grafting base(s) in proportions of 0.1 to 60% by weight, preferably of 0.5 to 50% by weight.

9. Process for the preparation of the graft polymer mixture according to any of Claims 1 to 8, **characterized in that** A) in a first step, the monomer component c) is grafted onto the monomer component b) at temperatures between -10°C and 250°C and in particular between 0°C and 100°C and preferably in each case in the presence of a solvent and in particular of a polar solvent, such as water or dimethyl sulphoxide, and then, in a second step, the graft product thus obtained is grafted onto the grafting base a), and/or B) the graft component c) is grafted onto the grafting base a) under said process conditions, and finally optionally C) the graft polymers obtained from the steps A) and B) are mixed.

10. Process for the preparation of the graft polymer mixture according to any of Claims 1 to 8, **characterized in that**, in step A), the monomer component b) is functionalized with a double bond and then polymerized with the monomer component c) in the presence of the monomer component a) as a grafting base.

11. Process according to Claim 10, **characterized in that** the functionalization of the monomer component b) is effected by reaction with not more than 10% by weight of an anhydride compound of the maleic anhydride or methacrylic anhydride type or of an epoxide compound of the glycidyl methacrylate type.

12. Process for the preparation of the graft polymer mixture according to any of Claims 1 to 8, **characterized in that** the monomer components a), b) and c) are reacted at temperatures between -10°C and 250°C and in particular between 0°C and 100°C and preferably in each case in the presence of a solvent and in particular of a polar solvent, such as water or dimethyl sulphoxide.

13. Process according to any of Claims 9 to 12, **characterized in that** a graft polymer mixture is obtained which contains I) a doubly grafted polymer consisting of the monomer component a) as a grafting base and a grafted-on graft product consisting of the monomer component b) as a base and the monomer component c) as a graft component, II) a doubly grafted polymer consisting of the monomer component b) as a grafting base and a grafted-on graft product consisting of the monomer component a) as a base and the monomer component c) as a graft component, and any desired mixtures thereof.

14. Process according to any of Claims 9 to 11, **characterized in that** the copolymers obtained are additionally crosslinked and/or postcrosslinked, in particular with the aid of polyfunctional ethylenically unsaturated compounds, such as, for example, di- or trimethacrylates.

15. Process according to any of Claims 9 to 12, **characterized in that** graft polymers having a molar mass M̅ₙ > 5000 g/mol and in particular > 10 000 g/mol and particularly preferably > 50 000 g/mol are obtained.

16. Use of the graft polymer mixture according to any of Claims 1 to 8 in construction chemistry applications and in the development, exploitation and completion of underground mineral oil and natural gas deposits and in deep wells.

17. Use according to Claim 16 as an additive for compositions containing hydraulic binders, in particular as a fluid loss additive and/or a flow improver.

18. Use according to either of Claims 16 and 17 in the cementing of oil and gas wells, preferably in the offshore area.

## Revendications

1. Mélange de polymères greffés à base de bases de greffage différentes les unes des autres, **caractérisé en ce que** le mélange et notamment les polymères greffés contenus dans celui-ci sont solubles dans l'eau et/ou biodégradables et les polymères greffés contiennent en tant que composant monomère a) du charbon brun et/ou des dérivés de polyphénol et b) des polyamides, ainsi que c) des monomères éthyléniquement insaturés différents les uns des autres.

2. Mélange de polymères greffés selon la revendication 1, **caractérisé en ce que** les polymères greffés contiennent les composants monomères a) et b) en tant que base de greffage et/ou composant de greffage et le composant monomère c) en tant que composant de greffage.

3. Mélange de polymères greffés selon l'une quelconque des revendications 1 ou 2, **caractérisé en ce que** les polymères greffés sont constitués par I) le composant monomère a) en tant que base de greffage et les composants monomères b) et c) en tant que composant de greffage, II) le composant monomère b) en tant que base de greffage et les composants monomères a) et c) en tant que composant de greffage, III) le composant monomère a) en tant que base de greffage, sur laquelle un produit greffé constitué par le composant b) en tant que base et c) en tant que composant de greffage est greffé, ainsi que IV) le composant monomère b) en tant que base de greffage, sur laquelle un produit greffé constitué par le composant a) en tant que base et c) en tant que composant de greffage est greffé.

4. Mélange de polymères greffés selon l'une quelconque des revendications 1 à 3, **caractérisé en ce que** le composant monomère a) consiste en au moins un membre de la série constituée par le charbon brun, le coke de charbon brun, la lignite et les dérivés de charbon brun, tels que p. ex. les lignosulfonates et l'acide humique, ainsi que les tanins.

5. Mélange de polymères greffés selon l'une quelconque des revendications 1 à 4, **caractérisé en ce que** le composant monomère b) consiste en au moins un membre de la série constituée par les polyamides naturels, de manière particulièrement préféré les caséines, les gélatines, les collagènes, les colles d'os, les albumines du sang, les protéines de soja et leurs produits de décomposition formés par oxydation, hydrolyse ou dépolymérisation, les polyamides synthétiques et leurs produits de décomposition formés par oxydation, hydrolyse ou dépolymérisation, ainsi que leurs mélanges.

6. Mélange de polymères greffés selon l'une quelconque des revendications 1 à 5, **caractérisé en ce qu'**il contient en tant que composant monomère c) des composés contenant un groupe vinyle sous leurs formes O, S, P et N, choisis dans la série constituée par les éthers de vinyle, l'acide acrylique, l'acide méthacrylique, l'acide 2-éthylacrylique, l'acide 2-propylacrylique, le N,N-diméthyl-méthyl-acrylamide, l'acide vinylacétique, l'acide vinylphosphonique, l'acide crotonique et isocrotonique, l'acide maléique, l'acide fumarique, l'acide itaconique, l'acide citraconique, ainsi que leurs esters et amides et styrènes et de préférence sous forme sulfonée telle que l'acide sulfonique contenant un groupe vinyle de la série constituée par l'acide 2-acrylamido-2-méthylpropanesulfonique (AMPS), l'acide vinylsulfonique, l'acide méthallylsulfonique et leurs sels au moins monovalents, ainsi que leurs mélanges quelconques.

7. Mélange de polymères greffés selon l'une quelconque des revendications 1 à 6, **caractérisé en ce que** le copolymère greffé contient le composant polyamide b) en proportions de 10 à 80 % en poids, de préférence de 50 à 80 % en poids, et le composant monomère éthyléniquement insaturé c) en proportions de 10 à 80 % en poids, de préférence de 50 à 80 % en poids.

8. Mélange de polymères greffés selon l'une quelconque des revendications 1 à 7, **caractérisé en ce que** les polymères greffés contiennent la ou les bases de greffage en proportions de 0,1 à 60 % en poids, de préférence de 0,5 à 50 % en poids.

9. Procédé de fabrication du mélange de polymères greffés selon l'une quelconque des revendications 1 à 8, **caractérisé en ce que** A) lors d'une première étape, le composant monomère c) est greffé sur le composant monomère b) à des températures comprises entre -10 et 250 °C, et notamment entre 0 et 100 °C, et de préférence à chaque fois en présence d'un solvant et notamment d'un solvant polaire, tel que l'eau ou le diméthylsulfoxyde, puis, lors d'une seconde étape, le produit de greffage ainsi obtenu est greffé sur la base de greffage a) et/ou B) dans les conditions de procédé données, le composant de greffage c) est greffé sur la base de greffage a), et enfin éventuellement C) les polymères greffés obtenus à partir des étapes A) et B) sont mélangés.

10. Procédé de fabrication du mélange de polymères greffés selon l'une quelconque des revendications 1 à 8, **caractérisé en ce qu'**à l'étape A), le composant monomère b) est fonctionnalisé avec une double liaison, puis polymérisé avec le composant monomère c) en présence du composant monomère a) en tant que base de greffage.

11. Procédé selon la revendication 10, **caractérisé en ce que** la fonctionnalisation du composant monomère b) a lieu par réaction avec au plus 10 % en poids d'un composé anhydride de type anhydride de l'acide maléique ou de l'acide méthacrylique ou d'un composé époxyde de type méthacrylate de glycidyle.

12. Procédé de fabrication du mélange de polymères greffés selon l'une quelconque des revendications 1 à 8, **caractérisé en ce que** les composants monomères a), b) et c) sont mis en réaction à des températures comprises entre -10 et 250 °C et notamment entre 0 et 100 °C, et de préférence à chaque fois en présence d'un solvant et notamment d'un solvant polaire, tel que l'eau ou le diméthylsulfoxyde.

13. Procédé selon l'une quelconque des revendications 9 à 12, **caractérisé en ce qu'**un mélange de polymères greffés est obtenu, qui contient I) un polymère doublement greffé constitué par le composant monomère a) en tant que base de greffage et un produit de greffage greffé constitué par le composant monomère b) en tant que base de greffage et le composant monomère c) en tant que composant de greffage, II) un polymère doublement greffé constitué par le composant monomère b) en tant que base de greffage et un produit de greffage greffé constitué par le composant monomère a) en tant que base de greffage et le composant monomère c) en tant que composant de greffage, et leurs mélanges quelconques.

14. Procédé selon l'une quelconque des revendications 9 à 11, **caractérisé en ce que** les copolymères obtenus sont également réticulés et/ou post-réticulés, notamment à l'aide de composés polyfonctionnels éthyléniquement insaturés tels que p. ex. des di- ou triméthacrylates.

15. Procédé selon l'une quelconque des revendications 9 à 12, **caractérisé en ce que** des polymères greffés d'une masse molaire Mₙ > 5 000 g/mol et notamment > 10 000 g/mol et de manière particulièrement préférée > 50 000 g/mol sont obtenus.

16. Utilisation du mélange de polymères greffés selon l'une quelconque des revendications 1 à 8 dans des applications chimiques de construction, ainsi que pour le développement, l'exploitation et la finalisation de gisements souterrains de pétrole et de gaz naturel, et pour les forages profonds.

17. Utilisation selon la revendication 16 en tant qu'additif pour compositions contenant des liants hydrauliques, notamment en tant qu'agent de rétention de l'eau et/ou agent d'écoulement.

18. Utilisation selon l'une quelconque des revendications 16 ou 17 lors de la cimentation de forages de pétrole et de gaz, notamment dans le domaine en mer.
